(19) **Europäisches Patentamt / European Patent Office / Office européen des brevets**

(11) **EP 3 013 767 B1**

(12) **FASCICULE DE BREVET EUROPEEN**

(45) Date de publication et mention de la délivrance du brevet:
**30.05.2018 Bulletin 2018/22**

(21) Numéro de dépôt: **14739897.8**

(22) Date de dépôt: **26.06.2014**

(51) Int Cl.:
*C04B 26/06* (2006.01)    *C09D 11/10* (2014.01)
*C09D 133/02* (2006.01)    *C09D 133/08* (2006.01)
*C09D 133/12* (2006.01)

(86) Numéro de dépôt international:
**PCT/FR2014/051615**

(87) Numéro de publication internationale:
**WO 2014/207389 (31.12.2014 Gazette 2014/53)**

(54) **UTILISATION D'UN POLYMÈRE D'ACRYLATE DE 2-OCTYLE COMME AGENT LIANT DANS UNE COMPOSITION DE REVÊTEMENT**

VERWENDUNG EINES 2-OCTYL-ACRYLATPOLYMERS ALS BINDEMITTEL IN EINER BESCHICHTUNGSZUSAMMENSETZUNG

USE OF A 2-OCTYL ACRYLATE POLYMER AS A BINDING AGENT IN A COATING COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1356312**

(43) Date de publication de la demande:
**04.05.2016 Bulletin 2016/18**

(73) Titulaire: **Arkema France**
**92700 Colombes (FR)**

(72) Inventeurs:
• **LINEMANN, Reinhard**
**66121 Saarbrucken (DE)**
• **BETREMIEUX, Isabelle**
**60580 Coye La Foret (FR)**
• **LOZE, Jean-Yves**
**27300 Saint-Victor-de-Chretienville (FR)**
• **BOONE, Alain**
**F-60140 Verderonne (FR)**

(74) Mandataire: **Bonnel, Claudine**
**ARKEMA France**
**Département Propriété Industrielle**
**420, rue d'Estienne d'Orves**
**92705 Colombes Cedex (FR)**

(56) Documents cités:
**WO-A1-2009/129087    JP-A- H10 231 325
US-A- 4 983 454**

EP 3 013 767 B1

**Description**

**DOMAINE TECHNIQUE**

La présente invention se rapporte à l'utilisation d'un polymère issu de la polymérisation de l'acrylate de 2-octyle et d'éventuellement au moins un autre monomère, comme agent liant dans ou pour la fabrication d'une composition de revêtement.

**ARRIERE-PLAN DE L'INVENTION**

Il est connu d'appliquer des peintures de type acrylique sur des surfaces, notamment des façades d'immeubles, non seulement pour les embellir et prévenir le dépôt de salissures, en particulier de poussière, mais aussi pour les protéger contre l'infiltration d'eau de pluie. A cette fin, le revêtement doit pouvoir adhérer convenablement sur la surface, se déformer aisément sans risque de fissuration et ne pas présenter de caractère collant.

Un exemple de composition pour peinture présentant le compromis de propriétés précité a été divulgué dans la demande EP 0 599 676. Cette composition renferme un polymère issu de la polymérisation de trois monomères distincts, constitués en particulier d'un mélange d'acide (méth)acrylique, d'un ester d'acide (méth)acrylique, tel que l'acrylate de n-butyle, et d'un dérivé de benzophénone, et éventuellement d'un quatrième monomère qui est le styrène.

Un autre type de composition pour peinture a été décrit dans le document US 2012/0121921. Il s'agit d'une composition de polymère ignifuge et résistante à l'eau, comprenant un liant polymère sous forme de latex, obtenu par polymérisation radicalaire d'au moins un monomère éthyléniquement insaturé, comprenant notamment l'acrylate de n-butyle, et de (méth)acrylate de tert-butyle.

Les composés acryliques, éventuellement associés au styrène, présentent en outre l'avantage de permettre la formulation de peintures offrant une bonne résistance à la lumière et aux conditions climatiques. Toutefois, ils sont généralement produits à partir de propylène, qui est un sous-produit du raffinage du pétrole. Or, les gisements de pétrole s'épuisent rapidement. Pour anticiper les difficultés d'approvisionnement liées à ces ressources, il serait souhaitable de pouvoir substituer ces composés acryliques par des composés obtenus à partir de sources de carbone d'origine renouvelable.

Pour satisfaire ce besoin, il a été proposé dans la demande WO 2012/084974 d'utiliser comme liant dans des peintures une dispersion de deux polymères vinyliques, renfermant au moins 10% en poids de monomères d'origine renouvelable tels que l'acrylate de n-butyle. Il est indiqué que ce liant permet l'obtention d'une peinture flexible, séchant à basse température et non collante.

Toutefois, il est apparu à la Demanderesse que l'acrylate de n-butyle ne renfermait pas suffisamment de carbone d'origine renouvelable et qu'il présentait un caractère plus hydrophile que des acrylates à chaîne longue tels que l'acrylate de 2-octyle.

Après de nombreuses recherches, la Demanderesse a démontré qu'il était possible de formuler une composition de revêtement sous forme de film, à base de polymère d'origine majoritairement renouvelable, laquelle composition présente à la fois de bonnes propriétés mécaniques, et en particulier une flexibilité et un allongement convenables et une bonne cohésion, ainsi qu'un caractère suffisamment hydrophobe, en utilisant comme liant un homo- ou copolymère à base d'acrylate de 2-octyle.

Un tel composé a déjà été décrit, notamment, dans la demande WO 2012/038441 comme constituant d'un modifiant choc et dans les documents WO 2008/046000, WO 2009/079582, WO 2009/132098 et WO 2009/129087 comme constituant d'un adhésif sensible à la pression.

Dans le document US 4,983,454, une résine acrylique, à base d'acrylate de 2-octyle et d'autres monomères (méth)acryliques, préparée dans un solvant aqueux est utilisée comme revêtement formant barrière interposé entre, d'une part un substrat métallique recouvert d'une couche de peinture obtenue par électrodéposition, et d'autre part, une couche supérieure de peinture. La résine acrylique présente une température de transition vitreuse de -52°C et une élongation à la rupture à -20°C de 610%. Ce revêtement est présenté comme flexible, adhésif, et surtout capable d'absorber l'énergie pour protéger le matériau composite contre les chocs, ce dernier constituant avantageusement une peinture automobile.

La Demanderesse a maintenant découvert qu'il est possible d'utiliser l'acrylate de 2-octyle d'origine renouvelable pour préparer un copolymère présentant des propriétés particulières bien adaptées pour former un liant dans des compositions de revêtement, ce revêtement ayant des propriétés identiques à celles obtenues avec des monomères issus de la pétrochimie.

**EXPOSE DE L'INVENTION**

La présente invention a ainsi pour objet l'utilisation d'un polymère issu de la polymérisation de l'acrylate de 2-octyle d'origine renouvelable et d'éventuellement au moins un autre monomère, comme agent liant dans ou pour la fabrication d'une composition de revêtement, caractérisée en ce que le polymère a une température de transition vitreuse (Tg), calculée par la loi de Fox, allant de -30°C à +30°C.

## DESCRIPTION DETAILLEE DE MODES DE REALISATION

Dans cette invention, il est proposé d'utiliser un polymère particulier comme agent liant dans une composition de revêtement.

Par "revêtement", on entend, dans la présente description, une couche appliquée sur un substrat sous forme de film, d'épaisseur généralement comprise entre $50\,\mu m$ et quelques mm, à partir d'un polymère liant de Tg allant de -30°C et +30°C selon la loi de Fox, ledit film étant appliqué en une épaisseur suffisante pour modifier l'aspect du substrat, en particulier ses propriétés optiques, et/ou protéger sa surface, notamment contre les rayures, l'humidité, les salissures ou la lumière.

Le terme "composition de revêtement" n'englobe donc pas les compositions adhésives, destinées à améliorer les propriétés adhésives du substrat. Il englobe en revanche les compositions de peinture, de mortier, d'enduit, de vernis et d'encre, sans que cette liste ne soit limitative.

En outre, dans cette description, l'expression "compris entre" s'entend comme incluant les bornes citées ainsi que toutes les valeurs intermédiaires, et l'expression « allant de à » s'entend comme excluant les bornes citées.

Le polymère utilisé selon l'invention comprend de l'acrylate de 2-octyle d'origine renouvelable.

Ce monomère est majoritairement, voire entièrement, issu de sources végétales et peut donc être considéré comme un matériau d'origine renouvelable, qui se caractérise par le fait que sa teneur en $^{14}C$ représente au moins 50%, de préférence au moins 60%, par exemple au moins 70%, voire au moins 80%, de celle du $CO_2$ atmosphérique (selon la norme ASTM D6866). En d'autres termes, l'acrylate de 2-octyle contient au moins $0,6 \times 10^{-10}$% en masse de $^{14}C$ par rapport au carbone total, selon la norme ASTM D6866-06. La teneur en $^{14}C$ peut être mesurée suivant une méthode de comptage par scintillation liquide et exprimée en désintégrations par minute par gramme de carbone, ou dpm/gC. La valeur de dpm/gC de l'acrylate de 2-octyle est généralement d'au moins $7,2 \pm 0,1$ dpm/gC.

L'acrylate de 2-octyle peut être préparé à partir de 2-octanol et d'acide acrylique, notamment en présence d'un catalyseur d'estérification du type acide comportant du soufre, tel que l'acide méthane sulfonique, et d'au moins un inhibiteur de polymérisation. Alternativement, il peut être préparé par réaction de transestérification entre un acrylate léger tel que l'acrylate d'éthyle, et le 2-octanol. Le 2-octanol peut être lui-même issu du traitement de l'acide ricinoléique, dérivé d'huile de ricin, avec de l'hydroxyde de sodium, suivi d'une distillation pour éliminer l'acide sébacique. Un procédé de préparation d'acrylate de 2-octyle par estérification directe est notamment décrit dans la demande WO 2013/064775.

Le monomère précité peut être homopolymérisé, auquel cas le polymère utilisé selon l'invention est un homopolymère d'acrylate de 2-octyle. En variante, il peut être copolymérisé avec au moins un autre monomère, de sorte que le polymère utilisé selon l'invention est un copolymère renfermant, avantageusement, de 1 à 80% en poids, préférentiellement de 25 à 75% en poids, et plus préférentiellement de 30 à 75%, voire de 50 à 70% en poids, d'acrylate de 2-octyle, par rapport au poids total du copolymère.

Par ailleurs, l'utilisation de monomères, eux-mêmes au moins en partie d'origine végétale et/ou animale, permet de consolider la nature bio-sourcée du copolymère contenant l'acrylate de 2-octyle.

Cet autre monomère peut notamment être choisi parmi : les monomères vinylaromatiques, tels que le styrène ; les nitriles éthyléniquement insaturés, tels que l'acrylonitrile ; les esters d'acides mono- et dicarboxyliques éthyléniquement insaturés, tels que l'acrylate de 2-éthylhexyle, l'acrylate de n-butyle et le méthacrylate de méthyle, les esters d'acide itaconique ; les esters d'acide monocarboxylique et d'alcool vinylique ou allylique, tels que l'acétate de vinyle ; les acides mono- et dicarboxyliques et sulfoniques éthyléniquement insaturés, tels que l'acide (méth)acrylique, l'acide itaconique et les acides styrène sulfoniques ; les amides d'acides mono- et dicarboxyliques éthyléniquement insaturés, tels que l'acrylamide ; les N-vinyllactames, tels que la N-vinyl pyrrolidone ; les N-vinylamides ; les N,N-diallylamines ; les N,N-diallyl-N-alkylamines ; les hétérocycles azotés substitués allyle ou vinyle, tels que le N-vinyl imidazole et les vinyl- et allylpyridines ; et leurs mélanges. Des co-monomères préférés sont les esters d'acides mono et di-carboxyliques éthyléniquement insaturés, en particulier le méthacrylate de méthyle et l'acrylate de n-butyle, les monomères vinylaromatique, plus particulièrement le styrène, et leurs mélanges.

D'autres monomères fonctionnels ou réticulants peuvent être avantageusement ajoutés à l'acrylate de 2-octyle avant polymérisation, en vue d'améliorer les propriétés de résistance chimique à l'eau ou à différents produits ménagers de la composition de revêtement. Ces monomères peuvent également améliorer les propriétés de barrière ou de résistance à l'encrassement de la composition de revêtement, ou encore améliorer les propriétés mécaniques du polymère telles que sa résistance à l'allongement. Parmi les monomères réticulants, on peut citer de façon non exhaustive la diacétone acrylamide en combinaison avec l'acide adipique bis-hydrazide, les monomères hydroxylés en combinaison avec les polyisocyanates, les (meth)acrylates siloxanés, les (méth)acrylates multi-fonctionnels, c'est-à-dire présentant plusieurs insaturations, et leurs mélanges. Parmi les monomères fonctionnels, on peut citer de façon non exhaustive les (méth)acrylates d'acétoxy ethyle, les monomères porteurs de fonction(s) phosphate ou phosphonate, les monomères porteurs de fonction(s) uréido, les monomères porteurs de fonction(s) amine et leurs mélanges.

Les monomères constituant le polymère utilisé selon l'invention peuvent être polymérisés de manière classique, par exemple au moyen d'une polymérisation radicalaire en émulsion aqueuse. Le pH de l'émulsion peut être tamponné pour être maintenu entre 4 et 7 pendant le procédé de polymérisation. Comme amorceurs radicalaires, on peut choisir ceux classiquement utilisés dans ce type de réaction, et notamment les amorceurs inorganiques tels que les persulfates d'ammonium, sodium et potassium, seuls ou en combinaison avec un agent réducteur destiné à abaisser la température de polymérisation, ou encore des amorceurs organiques tels que les hydropéroxydes de tert-butyle ou d'hydrogène activés par des agents réducteurs. En fonction des propriétés visées, un ou plusieurs agent(s) de transfert de chaîne pourront être ajoutés pendant le procédé afin d'obtenir la distribution de masses moléculaires voulue. La polymérisation peut être effectuée à une température de 0 à 150°C, de préférence de 30 à 100°C et par exemple de 50 à 90°C, pendant une durée de 4 à 6 heures, par exemple. Elle peut être conduite sous pression atmosphérique et/ou en présence d'un gaz inerte. Ce procédé de polymérisation résulte en un latex ayant avantageusement un taux de matières sèches compris entre 20 et 70% en poids et de préférence entre 35 et 60% en poids.

Le polymère obtenu a généralement une température de transition vitreuse (Tg), calculée grâce à la loi de Fox, allant de -30°C à +30°C, plus préférentiellement comprise entre -10 et 10°C, voire entre -10 et 0°C.

Le polymère peut être obtenu selon un procédé en une seule étape, c'est-à-dire avec une alimentation continue en une composition monomérique unique, ou selon un procédé multi-étapes mettant en oeuvre différentes compositions monomériques, afin d'obtenir des particules présentant des domaines de Tg différents. Ce type de particules est désigné par particules du type coeur-écorche (core-shell) ou particules structurées. Dans ce cas, la Tg moyenne des polymères obtenus à l'issue de chaque étape peut également aller de -30°C à +30°C.

En plus de ce polymère, la composition de revêtement utilisée selon l'invention contient de l'eau. Elle peut renfermer divers additifs choisis par exemple parmi : un ou plusieurs pigments ; une ou plusieurs charges pulvérulentes ; un ou plusieurs ajusteurs de pH, en particulier une ou plusieurs bases permettant de neutraliser les monomères acides éventuellement copolymérisés avec l'acrylate de 2-octyle, telles qu'un hydroxyde alcalin (en particulier l'hydroxyde de sodium), l'ammoniaque ou une amine hydrosoluble ; un ou plusieurs agents dispersants et/ou mouillants, tels que les polyphosphates de sodium, potassium ou ammonium et les sels d'acide naphtalène sulfonique ; un ou plusieurs agents épaississants, tels que la xanthane et les dérivés de cellulose ; un ou plusieurs agents anti-mousse ; un ou plusieurs agents filmogènes ; un ou plusieurs agents anti-gel ; un ou plusieurs agents ignifugeants, notamment des composés organophosphorés ou de l'hydroxyde de magnésium ou d'aluminium ; un ou plusieurs biocides ; et leurs mélanges.

Les pigments peuvent en particulier être choisis parmi : les pigments inorganiques blancs ou colorés, tels que le dioxyde de titane, l'oxyde de zinc, le sulfate de baryum, le trioxyde d'antimoine, les oxydes de fer, l'ultramarine et le noir de carbone ; les pigments organiques, tels que les colorants azo, les indigoïdes et les anthraquinoïdes ; et leurs mélanges.

Les charges pulvérulentes peuvent notamment être choisies parmi : le carbonate de calcium ou de magnésium ; la silice ; les silicates, tels que le talc, le kaolin, le mica ; le sulfate de calcium, les aluminosilicates ; et leurs mélanges. Ces charges sont de préférence mises en oeuvre sous forme finement divisée.

En outre, en particulier dans le cas où elle est utilisée pour la fabrication d'un enduit, la composition de revêtement selon l'invention peut renfermer un liant supplémentaire, en particulier une résine de silicone ou un silicate.

Les différents constituants de la composition de revêtement peuvent être mélangés de manière classique pour l'homme du métier, dans leurs proportions habituelles. On préfère que le polymère soit ajouté, généralement sous forme de dispersion aqueuse (latex), dans une dispersion ou une pâte de pigments.

Le polymère sous forme de dispersion aqueuse représente généralement de 5 à 90% en poids, de préférence de 10 à 75% en poids, par rapport au poids total de la composition. En poids sec, le polymère représente généralement de 5 à 50% en poids, et de préférence de 20 à 40% en poids, par rapport au poids total de la composition.

Cette composition peut se présenter sous forme liquide ou semi-solide.

Elle a de préférence une concentration en extrait sec comprise entre 25 et 75% en poids et de préférence entre 35 et 65% en poids.

La composition utilisée selon l'invention peut être appliquée sur un substrat quelconque, notamment en bois, en métal, en verre, en ciment, en papier, en textile, en cuir, en plastique ou en brique, par tout moyen, et notamment à l'aide d'une brosse, d'un pinceau, d'un rouleau, d'un tampon, d'un pulvérisateur ou d'un aérosol, éventuellement après application sur le substrat d'un primaire d'adhérence.

Elle forme alors sur ce substrat un film à température ambiante (<30°C), permettant de lui conférer les propriétés esthétiques recherchées et de le protéger, notamment contre l'humidité.

L'invention sera mieux comprise à la lumière des exemples non limitatifs suivants, qui ont pour but d'illustrer l'invention et non de limiter sa portée, définie par les revendications annexées.

**EXEMPLES**

**Exemple 1 : Préparation de dispersions de polymères**

A. Mode opératoire général

1) Matières premières

Pour la préparation des polymères selon l'invention, on a utilisé les matières premières indiquées dans le Tableau 1 ci-dessous.

Tableau 1

| Constituant | Fonction | Nature chimique | Fournisseur |
|---|---|---|---|
| Emulsifier[R] E30 | Tensioactif | Alcane sulfonate de Sodium | Rhodia |
| Disponil[R] FES77 | Tensioactif | Sulfate de sodium d'alcool gras éthoxylé (30% dans l'eau) | BASF |
| Disponil[R] A3065 | Tensioactif | Mélange d'alcools gras éthoxylés linéaires (65% dans l'eau) | BASF |
| Emulan[R] TO4070 | Tensioactif | Alcool gras éthoxylé (70% dans l'eau) | BASF |
| AE2H | Monomère | Acrylate de 2-éthyl hexyle | Arkema |
| A2Oct | Monomère | Acrylate de 2-octyle | Arkema |
| ABu | Monomère | Acrylate de butyle | Arkema |
| MAM | Monomère | Méthacrylate de methyle | Arkema |
| AA | Monomère | Acide acrylique | Arkema |
| AMA | Monomère | Acide méthacrylique | Arkema |
| Acrylamide | Monomère | 2-propénamide | Cytec |
| HPMA | Monomère | N(2-hydroxypropyl) méthacrilamide | BASF |
| HEMA | Monomère | Hydroxyéthyl méthacrylate | BASF |
| TEGDMa | Monomère | Triéthylène glycol diméthacylate | BASF |
| Mallyl | Réticulant | Méthacrylate d'allyle | BASF |
| nDDM | Mercaptan | N-dodécylmercaptan | Acros |
| (NH4)2S2O8 | Peroxyde | Persulfate d'ammonium | Aldrich |
| Na2S2O5 | Réducteur | Métabisulfite de sodium | Prolabo |
| NaOH | Neutralisant | Hydroxyde de sodium | Prolabo |
| Acticide MBS | Biocide | Méthylisothiazoline (MIT) et Benzisothiazolinone (BIT) | Thor |

La Tg des polymères a été calculée comme suit, selon la loi de Fox :

$$1/Tg = x^1/Tg^1 + x^2/Tg^2 + ... x^n/Tg^n$$

où x représente la fraction massique du monomère considéré et Tg la température de transition vitreuse de son homopolymère. Dans les essais qui suivent, on a retenu les valeurs mentionnées dans le Tableau 2 ci-dessous :

Tableau 2

| AE2H | Acrylate de 2-éthyl hexyle | -70°C |
|---|---|---|
| ABu | Acrylate de butyle | -54°C |
| A2Oct | Acrylate de 2-octyle | -49°C |

(suite)

| MAM | Méthacrylate de méthyle | +105°C |
|-----|-------------------------|--------|
| AA  | Acide acrylique         | +106°C |
| AMA | Acide méthacrylique     | +228°C |

2) Installation

Les synthèses ont été effectuées dans un réacteur de 3 l (contenance interne) en verre, équipé d'une double enveloppe, muni d'une agitation efficace (vortex), d'un réfrigérant à triple flux, d'un contrôle et d'une régulation de la température matière. Le réacteur comportait le nombre de raccords d'introduction nécessaires à l'introduction séparée des différents composants, ainsi qu'une introduction dédiée à l'inertage à l'azote de l'ensemble. L'étanchéité a été vérifiée avant chaque synthèse. L'installation était équipée d'un système permettant d'ajuster les débits d'introduction des composants. La température de la matière, ainsi que les températures de la double enveloppe, ont été enregistrées et ajustées. La synthèse a été réalisée en semi-continu.

3) Méthodes de caractérisation des dispersions

a) Extrait sec (ES)

L'extrait sec des dispersions aqueuses a été mesuré selon la norme ISO 3251.

b) pH

Le pH des dispersions aqueuses a été mesuré selon la norme ISO 976.

c) Viscosité

La viscosité des dispersions aqueuses a été mesurée selon la norme ISO 2555.

d) Taille des particules

La taille des particules a été mesurée par Spectroscopie de Corrélation de Photons (PCS), à l'aide d'un appareillage N4+ de Beckman Coulter. L'échantillon a été dilué (3 à 5 gouttes d'émulsion dans 50 ml d'eau) dans une cuve en polystyrène à l'aide d'eau désionisée sur un filtre en acétate de cellulose de 0,22 $\mu$m. La taille des particules a été mesurée à une température de 25°C, sous un angle de mesure de 90° et à une longueur d'onde du laser de 633 nm.

e) Température minimale de formation de film (TMF) mesurée et attendue en fonction de la structuration ou non de la particule

La TMF des dispersions aqueuses a été mesurée selon la norme ISO 2115.

B. Synthèses réalisées

Une première dispersion de polymère, ci-après désignée par "Dispersion D1", a été préparée comme suit.
15,25g d'une solution à 40% d'Emulsifier E30, ont été solubilisés dans 1165,85g d'eau déminéralisée en pied de cuve. Le pH du pied de cuve était avantageusement inférieur à 3. La température du pied de cuve a été portée à 80°C.
Séparément, on a préparé une pré-émulsion en dispersant 44,38g d'Emulsifier E30 (40%) et 83,33g de Disponil FES 77 (30%) dans 865,04g d'eau déminéralisée sous bonne agitation.
On y a ajouté tour à tour et sous bonne agitation :

- 1007,5g de MAM
- 1462,5g d'A2Oct

La pré-émulsion ainsi formée était blanche et stable pendant au moins le temps de la polymérisation. Elle a été maintenue sous légère agitation.

Enfin, différentes solutions de catalyseurs ont été préparées comme suit.

S1 : 1,25 g de persulfate d'ammonium ont été solubilisés dans 11,25g d'eau.
S2 : 1,50g de persulfate d'ammonium ont été solubilisés dans 148,50g d'eau.
S3 : 1,25g de persulfate d'ammonium ont été solubilisés dans 123.75g d'eau.
S4 : 2g de métabisulfite de sodium ont été solubilisés dans 198g d'eau.

La polymérisation a été conduite de la manière suivante.

i) Ensemencement

Dans le pied de cuve renfermant la charge initiale, stable à 80°C, a été introduit, en vue de l'ensemencement, 270,1 g de la pré-émulsion décrite plus haut. Une fois la température stabilisée à 80°C, 100% de la solution S1, de 12,5g, ont été ajoutés. Le maximum d'exothermie marquait la fin de cette étape. La taille de particule était d'environ 60nm et la conversion était supérieure à 70%.

ii) Polymérisation

On a introduit le reste de la pré-émulsion, ainsi que 5g de Mallyl et 25g d'AA, durant 210 minutes, à une température de polymérisation de 82°C.
On a coulé parallèlement en 255 min la solution S2, soit 150g.

iii) Etape de consommation des monomères résiduels

La température a été maintenue pendant 15 minutes à 82°C. A la fin de la cuisson thermique, on a coulé séparément et parallèlement:

- en 45 mn, la solution S3, soit 125g
- en 75 mn, la solution S4, soit 200g,

toujours à 82°C. Ce traitement redox a été suivi d'une cuisson à 82°C pendant 20 minutes avant refroidissement à température ambiante.

iv) Ajouts finaux

A 30-35°C, le latex a été neutralisé par addition de soude jusqu'à pH 8-9 avant d'y ajouter un biocide. Il a ensuite été ajusté en extrait sec et filtré sur toile de 100μm. L'extrait sec final s'élevait à 47,6%.

On a obtenu une dispersion D1 comportant un polymère à base de MAM/A2Oct/AA/Mallyl dans les proportions massiques 40.3 / 58.5 / 1 / 0.2, présentant une Tg Fox de 0°C.

La taille de particule finale était d'environ 130 nm, la viscosité était inférieure à 1000 mPa.s, la TMF mesurée était de 5°C.

La liste des autres dispersions aqueuses préparées sur la base du même mode opératoire est présentée dans le Tableau 3 ci-dessous, avec indication des compositions qui variaient d'un essai à l'autre.

Tableau 3

| Monomères | Dispersion D2 (comparative) | Dispersion D3 (comparative) | Dispersion D4 |
|---|---|---|---|
| MAM | 41 | 46.05 | 36.45 |
| A2Oct | | | 60.6 |
| ABu | 56.05 | | |
| AE2H | | 51 | |
| AMA | 2.7 | 2.7 | 2.7 |
| AA | 0.25 | 0.25 | 0.25 |
| TMF (°C) | 0 | +5 | +5 |

(suite)

| Monomères | Dispersion D2 (comparative) | Dispersion D3 (comparative) | Dispersion D4 |
|---|---|---|---|
| Tg Fox (°C) | -3 | -9 | -1 |

Dans ces trois essais, 68,5 g d'acide méthacrylique ont été ajoutés à la pré-émulsion et le Mallyl a été remplacé par un agent de transfert, le nDDM, à raison de 0,025 part.

## C. Caractérisation physico-chimique des dispersions

Les caractéristiques des dispersions D2 à D4 obtenues sont rassemblées dans le Tableau 4 ci-dessous.

Tableau 4

|  | D2 | D3 | D4 |
|---|---|---|---|
| Extrait sec (%) | 50,0 | 54.8 | 55.1 |
| pH après neutralisation | 8 | 8 | 8,2 |
| Viscosité à 20 tours/min (mPa.s) Température (°C) Mobile | 120 20 1 | 1630 21 2 | 1750 20 3 |
| Taille de particules (nm) IP | 145 0,05 | 160 0,001 | 160 0,007 |
| TMF (°C) | 0 | 5 | 5 |

**Exemple 2 : Propriétés physiques**

On a appliqué chaque dispersion obtenue à l'Exemple 1, sous forme de film, sur une plaque de polypropylène (800$\mu$m hum) avant de la sécher pendant 7 jours à 23°C, sous 50 % d'humidité relative.
Les tests suivants ont alors été réalisés :

Analyse mécanique dynamique (DMA) : On a utilisé un appareil Mettler DMA861e en mode cisaillement, avec un balayage en température de - 50°C à 200°C. La rampe de montée en température était de 3°C/min, la fréquence de 1 Hz.

Tests mécaniques : On a utilisé une machine de traction MTS réglée à une température de 23°C, une humidité relative de 50 %, une vitesse d'essai de 500 mm/min, avec une cellule de 50 N et une éprouvette en haltère.

Les résultats obtenus sont rassemblés dans le Tableau 5 suivant.

Tableau 5

| Ech. | DMA | | | Traction à 500 mm/min à 23°C | | | | | |
|---|---|---|---|---|---|---|---|---|---|
| | | | | Ctr rupt. (MPa) | | Allong. Rupt. (%) | | Mod. Young (MPa) | |
| | T$\alpha$ (°C) | Tan$\delta$ | E' (Pa) à 100°C | Val. | ET | Val. | ET | Val. | ET |
| D2 | 18 | 2.14 | $1.6 \times 10^4$ | 4.69 | 0.49 | 463 | 17 | 19 | 0.4 |
| D3 | 23 | 1.84 | $2.3 \times 10^4$ | 6.61 | 0.19 | 409 | 17 | 35 | 0.8 |
| D4 | 20 | 1.93 | $1.5 \times 10^4$ | 5.04 | 0.20 | 480 | 14 | 18 | 0.3 |

Il ressort de ce tableau que les écarts entre les dispersions testées sont extrêmement faibles, de sorte que les propriétés mécaniques et visco-élastiques des films sont considérées comme équivalentes. L'utilisation de plus grandes quantités d'A2Oct ne les modifie pas.

### Exemple 3 : Evaluation applicative

a. Formulation des vernis

On a formulé des vernis en utilisant les matières premières identifiées dans le Tableau 6 ci-dessous.

Tableau 6

| Constituant | Fonction | Nature chimique | Fournisseur |
|---|---|---|---|
| AQUAFLOW NHS 300 | épaississant | polyéther polyacétal hydrophobiquement modifié (HMPAPE) | ASHLAND |
| AQUAFLOW NMS 450 | épaississant | polyéther polyacétal hydrophobiquement modifié (HMPAPE) | ASHLAND |
| FOAMSTAR A38 | antimousse | polymère | COGNIS BASF |

Les dispersions préparées à l'Exemple 1 ont été formulées sous forme de vernis (extrait sec volumique à 35%) ayant les compositions suivantes :

Vernis V1 :

| Constituant | Poids (g) | Volume (mL) |
|---|---|---|
| Dispersion D2 | 145.13 | 136.92 |
| AQUAFLOW NHS 300 | 8.76 | 8.42 |
| AQUAFLOW NMS 450 | 4.98 | 4.83 |
| EAU | 41.04 | 41.04 |
| FOAMSTAR A38 | 0.10 | 0.10 |
| Total | 200.00 | 191.31 |

Vernis V2 :

| Constituant | Poids (g) | Volume (mL) |
|---|---|---|
| Dispersion D3 | 132.10 | 124.62 |
| AQUAFLOW NHS 300 | 8.70 | 8.37 |
| AQUAFLOW NMS 450 | 4.94 | 4.8 |
| EAU | 54.16 | 54.16 |
| FOAMSTAR A38 | 0.10 | 0.10 |
| Total | 200.00 | 192.05 |

Vernis V3 :

| Constituant | Poids (g) | Volume (mL) |
|---|---|---|
| Dispersion D4 | 132.62 | 125.11 |
| AQUAFLOW NHS 300 | 8.70 | 8.37 |
| AQUAFLOW NMS 450 | 4.95 | 4.80 |
| EAU | 53.63 | 53.63 |
| FOAMSTAR A38 | 0.10 | 0.10 |
| Total | 200 | 192.02 |

b. Evaluation de la résistance à l'eau

Les vernis V1 à V3 ci-dessus ont été appliqués sur une plaque de verre (200$\mu$m hum) et séchés pendant 7 jours à 23°C, 50% HR.

A l'issue des 7 jours, une goutte d'eau a été déposée en surface du film de vernis et laissée en contact avec celui-ci pendant 15 minutes, 30 minutes, 1 heure, 2 heures, 8 heures puis 24 heures. Le blanchiment du film au contact de l'eau a alors été évalué selon l'échelle de cotation suivante : 0 = aucun blanchiment, 1 = léger blanchiment, 2 = blanchiment moyen, 3 = blanchiment intense.

| | Vernis : | V1 | V2 | V3 |
|---|---|---|---|---|
| | Temps de contact | | | |
| | 15 minutes | 0 | 0 | 0 |
| | 30 minutes | 1 | 0 | 1 |
| Résistance à l'eau | 1 heure | 1 | 0 | 1 |
| | 2 heures | 2 | 1 | 2 |
| | 8 heures | 3 | 2 | 2 |
| | 24 heures | 3 | 2 | 2 |

Comme on le voit, le vernis V3 (formulé à partir de la dispersion D4 qui contient le monomère A2OCT bio-sourcé) présente une résistance à l'eau équivalente au vernis V1 qui est formulé avec la dispersion D2 ne contenant pas de monomère bio-sourcé.

## Exemple 4

Trois autres dispersions aqueuses ont été préparées selon le même mode opératoire indiqué à l'exemple 1. Les compositions et caractéristiques sont rassemblées dans le tableau 7 ci-après :

Tableau 7

| Monomères | Dispersion D5 | Dispersion D6 | Dispersion D7 Comp |
|---|---|---|---|
| MAM | 49.5 | 32.59 | 1 |
| A2Oct | 49.5 | 64.05 | 95.69 |
| AA | 1 | | 1.31 |
| HPMA | | 1.13 | |
| HEMA | | | 2 |
| Acrylamide | | 2.04 | |
| TEGDMa | | 0.18 | |
| TMF (°C) | +17 | 0 | 0 |
| Tg Fox (°C) | +4 | -20 | -56 |
| Extrait sec, % | 48.3 | 56,0 | 56,2 |
| pH après neutralisation | 8.2 | 7,4 | 8,4 |

Les tests mécaniques, tels que décrits à l'exemple 2 ont été appliqués à ces 3 dispersions, ainsi que des tests de traction à 5 mm/min réalisés à -20°C.
Les résultats sont rassemblés dans le tableau 8 ci-après.

Ces essais montrent que les dispersions D5 et D6 présentent une élongation à la rupture très faible à - 20°C comparativement à la dispersion D7 qui a une Tg de -56°C.

Tableau 8

| Ech. | DMA | | | Traction à 500 mm/min à 23°C | | | | | |
|---|---|---|---|---|---|---|---|---|---|
| | | | | Ctr rupt. (MPa) | | Allong. Rupt. (%) | | Mod. Young (MPa) | |
| | T$\alpha$ (°C) | Tan$\delta$ | E' à 100°C (Pa) | Val. | ET | Val. | ET | Val. | ET |
| D5 | 33 | 2,10 | 16,5 x 10$^4$ | 12 | 1,6 | 214 | 29 | 259 | 11 |
| D6 | 13 | 1,48 | 36,3 x 10$^4$ | 5,41 | 0,35 | 834 | 53 | 1,1 | 0,01 |
| D7 comp | -27 | 2,02 | 1,26 X 10$^4$ | Impossible à déterminer | | | | | |
| | | | | Traction à 5 mm/min à -20°C | | | | | |
| | | | | Ctr rupt. (MPa) | | Allong. Rupt. (%) | | Mod. Young (MPa) | |
| | | | | Val. | ET | Val. | ET | Val. | ET |
| D5 | | | | 34 | 6 | 3,5 | 0,6 | 1020 | 63 |
| D6 | | | | 22 | 0,1 | 207 | 7 | 419 | 16 |
| D7 comp | | | | 2,1 | 0, 09 | > 1100 | - | 1,1 | 0,2 |

## Revendications

1. Utilisation d'un polymère issu de la polymérisation de l'acrylate de 2-octyle d'origine renouvelable et d'éventuellement au moins un autre monomère, comme agent liant dans ou pour la fabrication d'une composition de revêtement, **caractérisée en ce que** le polymère a une température de transition vitreuse (Tg), calculée par la loi de Fox, allant de -30°C à +30°C.

2. Utilisation selon la revendication 1, **caractérisée en ce que** ledit autre monomère est choisi parmi : les monomères vinylaromatiques tels que le styrène ; les nitriles éthyléniquement insaturés, tels que l'acrylonitrile ; les esters d'acides mono- et dicarboxyliques éthyléniquement insaturés, tels que l'acrylate de 2-éthylhexyle, l'acrylate de n-butyle, le méthacrylate de méthyle, les esters d'acide itaconique ; les esters d'acide monocarboxylique et d'alcool vinylique ou allylique, tels que l'acétate de vinyle ; les acides mono- et dicarboxyliques et sulfoniques éthyléniquement insaturés, tels que l'acide (méth)acrylique, l'acide itaconique et les acides styrène sulfoniques ; les amides d'acides mono- et dicarboxyliques éthyléniquement insaturés, tels que l'acrylamide ; les N-vinyllactames, tels que la N-vinyl pyrrolidone ; les N-vinylamides ; les N,N-diallylamines ; les N,N-diallyl-N-alkylamines ; les hétérocycles azotés substitués allyle ou vinyle, tels que le N-vinyl imidazole et les vinyl- et allylpyridines ; et leurs mélanges.

3. Utilisation selon la revendication 2, **caractérisée en ce que** ledit autre monomère est choisi parmi les esters d'acides mono et di-carboxyliques éthyléniquement insaturés, en particulier le méthacrylate de méthyle et l'acrylate de n-butyle, les monomères vinylaromatique, plus particulièrement le styrène, et leurs mélanges.

4. Utilisation selon l'une quelconque des revendications 1 à 3, **caractérisée en ce que** le polymère a une température de transition vitreuse (Tg), calculée par la loi de Fox, comprise entre -10 et +10°C voire entre 0 et -10°C.

5. Utilisation selon l'une quelconque des revendications 1 à 4, **caractérisée en ce que** le polymère est un copolymère renfermant, de 30 à 75%, et plus préférentiellement de 50 à 70% en poids, d'acrylate de 2-octyle, par rapport au poids total du copolymère.

6. Utilisation selon l'une quelconque des revendications 1 à 5, **caractérisée en ce que** la composition de revêtement est une composition de peinture, de mortier, d'enduit, de vernis ou d'encre.

7. Utilisation selon l'une quelconque des revendications 1 à 6, **caractérisée en ce que** le polymère représente, en poids sec, de 5 à 50% en poids, et de préférence de 20 à 40% en poids, par rapport au poids total de la composition.

**Patentansprüche**

1. Verwendung eines Polymers, das sich aus der Polymerisation von 2-Octylacrylat erneuerbaren Ursprungs und gegebenenfalls mindestens eines anderen Monomers ergibt, als Bindemittel bei der oder für die Herstellung einer Beschichtungszusammensetzung, **dadurch gekennzeichnet, dass** das Polymer eine gemäß dem Fox-Gesetz berechnete Glasübergangstemperatur (Tg) im Bereich von -30 °C bis +30 °C aufweist.

2. Verwendung nach Anspruch 1, **dadurch gekennzeichnet, dass** das andere Monomer aus vinylaromatischen Monomeren wie Styrol; ethylenisch ungesättigten Nitrilen wie Acrylnitril; Estern von ethylenisch ungesättigten Mono- und Dicarbonsäuren, wie 2-Ethylhexylacrylat, n-Butylacrylat, Methylmethacrylat und Itaconsäureestern; Estern von Monocarbonsäure und Vinyl- oder Allylalkohol, wie Vinylacetat; ethylenisch ungesättigten Mono- und Dicarbonsäuren und Sulfonsäuren, wie (Meth)-acrylsäure, Itaconsäure und Styrolsulfonsäuren; ethylenisch ungesättigten Mono- und Dicarbonsäureamiden, wie Acrylamid; N-Vinyllactamen, wie N-Vinylpyrrolidon; N-Vinylamiden; N,N-Diallylaminen; N,N-Diallyl-N-alkylaminen; allyl- oder vinylsubstituierten stickstoffhaltigen Heterocyclen, wie N-Vinylimidazol und Vinyl- und Allylpyridinen; und Mischungen davon ausgewählt ist.

3. Verwendung nach Anspruch 2, **dadurch gekennzeichnet, dass** das andere Monomer aus Estern von ethylenisch ungesättigten Mono- und Dicarbonsäuren, insbesondere Methylmethacrylat und n-Butylacrylat, vinylaromatischen Monomeren, spezieller Styrol, und Mischungen davon ausgewählt ist.

4. Verwendung nach einem der Ansprüche 1 bis 3, **dadurch gekennzeichnet, dass** das Polymer eine gemäß dem Fox-Gesetz berechnete Glasübergangstemperatur (Tg) im Bereich von -10 bis +10 °C oder sogar zwischen 0 und -10 °C aufweist.

5. Verwendung nach einem der Ansprüche 1 bis 4, **dadurch gekennzeichnet, dass** es sich bei dem Polymer um ein Copolymer handelt, das 30 bis 75 Gew.-% und weiter bevorzugt 50 bis 70 Gew.-% 2-Octylacrylat, bezogen auf das Gesamtgewicht des Copolymers, enthält.

6. Verwendung nach einem der Ansprüche 1 bis 5, **dadurch gekennzeichnet, dass** es sich bei der Beschichtungszusammensetzung um eine Anstrichmittel-, Mörtel-, Überzugs-, Klarlack- oder Tintenzusammensetzung handelt.

7. Verwendung nach einem der Ansprüche 1 bis 6, **dadurch gekennzeichnet, dass** das Polymer auf Trockengewichtsbasis 5 bis 50 Gew.-% und vorzugsweise 20 bis 40 Gew.-%, bezogen auf das Gesamtgewicht der Zusammensetzung, ausmacht.

**Claims**

1. The use of a polymer resulting from the polymerization of 2-octyl acrylate of renewable origin and optionally at least one other monomer, as binding agent in or for the manufacture of a coating composition, **characterized in that** the polymer has a glass transition temperature (Tg), calculated by Fox's law, ranging from -30°C and +30°C.

2. The use as claimed in claim 1, **characterized in that** said other monomer is chosen from: vinylaromatic monomers, such as styrene; ethylenically unsaturated nitrides, such as acrylonitrile; esters of ethylenically unsaturated mono- and dicarboxylic acids, such as 2-ethylhexyl acrylate, n-butyl acrylate, methyl methacrylate and itaconic acid esters; esters of monocarboxylic acid and vinyl or allyl alcohol, such as vinyl acetate; ethylenically unsaturated mono- and dicarboxylic and sulfonic acids, such as (meth)acrylic acid, itaconic acid and styrenesulfonic acids; amides of ethylenically unsaturated mono- and dicarboxylic acids, such as acrylamide; N-vinyllactams, such as N-vinylpyrrolidone; N-vinylamides; N,N-diallylamines; N,N-diallyl-N-alkylamines; allyl- or vinyl-substituted nitrogenous heterocycles, such as N-vinylimidazole and vinyl- and allylpyridines; and their mixtures.

3. The use as claimed in claim 2, **characterized in that** said other monomer is chosen from esters of ethylenically unsaturated mono- and dicarboxylic acids, in particular methyl methacrylate and n-butyl acrylate, vinylaromatic monomers, more particularly styrene, and their mixtures.

4. The use as claimed in any one of claims 1 to 3, **characterized in that** the polymer has a glass transition temperature (Tg), calculated by Fox's law, of between - 10°C and +10°C, indeed even between -10°C and 0°C.

5. The use as claimed in any one of claims 1 to 4, **characterized in that** the polymer is a copolymer including from 30% to 75% by weight and more preferably from 50% to 70% by weight of 2-octyl acrylate, with respect to the total weight of the copolymer.

6. The use as claimed in any one of claims 1 to 5, **characterized in that** the coating composition is a paint, mortar, coating, varnish or ink composition.

7. The use as claimed in any one of claims 1 to 6, **characterized in that** the polymer represents, by dry weight, from 5% to 50% by weight and preferably from 20% to 40% by weight, with respect to the total weight of the composition.

## RÉFÉRENCES CITÉES DANS LA DESCRIPTION

**Documents brevets cités dans la description**

- EP 0599676 A
- US 20120121921 A
- WO 2012084974 A
- WO 2012038441 A
- WO 2008046000 A
- WO 2009079582 A
- WO 2009132098 A
- WO 2009129087 A
- US 4983454 A
- WO 2013064775 A